Europäisches Patentamt

European Patent Office

Office européen des brevets

(11) Publication number: **0 282 768 B1**

# EUROPEAN PATENT SPECIFICATION

(45) Date of publication of patent specification: **21.08.91**

(51) Int. Cl.⁵: **C10B 53/00, F23G 7/14, F23G 5/08**

(21) Application number: **88102592.8**

(22) Date of filing: **22.02.88**

(54) Apparatus for rendering environmental waste benign.

(30) Priority: **18.03.87 US 27775**

(43) Date of publication of application:
**21.09.88 Bulletin 88/38**

(45) Publication of the grant of the patent:
**21.08.91 Bulletin 91/34**

(84) Designated Contracting States:
**DE ES FR GB IT SE**

(56) References cited:
**EP-A- 0 096 538**
**WO-A-88/01711**
**DE-B- 1 181 360**
**US-A- 3 812 620**
**US-A- 3 933 434**

(73) Proprietor: **WESTINGHOUSE ELECTRIC COR-PORATION**
**Westinghouse Building Gateway Center**
**Pittsburgh Pennsylvania 15222(US)**

(72) Inventor: **Levin, George Benjamin**
**276 Fieldbrook Drive**
**Pittsburgh Pennsylvania 15228(US)**

(74) Representative: **Fleuchaus, Leo, Dipl.-Ing. et al**
**Fleuchaus & Wehser Melchiorstrasse 42**
**W-8000 München 71(DE)**

Rank Xerox (UK) Business Services

## Description

This invention relates to an apparatus for destroying hazardous waste material and more particularly to treating earth contaminated with hazardous waste to render the waste benign with respect to the environment.

Waste materials are generally uncharacterized mixtures of benign and/or toxic organic or inorganic chemicals in the solid, liquid and/or gaseous forms, biological materials, water, and inert fillers such as sand or soil. It is this uncharacterized property which gives rise to uncertainties in selecting an appropriate method of waste treatment to render a toxic or hazardous material safe for subsequent release into the environment. It is also this uncharacterized property which has led to public acceptance of landfill burial as the preferred method of disposing in spite of technical objections simply because of historic familiarity and low cost of this method.

To render unspecified waste permanently benign, it is necessary to use a technology which reliably produces results acceptable on technical, environmental, and legal grounds, and which also produces public acceptance even if the costs are higher.

Incinerators in which wastes are subjected to high temperature combustion to convert the waste to benign substances is widely accepted. Though this method of waste disposal is acceptable for many kinds of wastes, it still falls short of performance goals where toxic and hazardous substances are treated in conventional incinerators.

By applying the general concept of thermal treatment, it is possible to consider the next step to improve the thermal treatment technology into a one-step on-site transformation of any waste at any location into benign atmospheric emissions and sterile unleachable glass or metal ingots. Such a scenario has been proposed in U.S. Patent 3,933,434, which utilizes high temperature apparatus and allows adequate temperature residence time to render organic compounds passive. Even U.S. Patent 3,933,434 has limitations which require that the input be in the form of finely dispersed solids or such solids mixed with gases or vapors. Further EP-A-96538 discloses an apparatus for the decomposition of hazardous materials, which uses a gas-tight chamber for treatment of the material. This arrangement provides difficulties when different materials should be treated.

While these known devices facilitate acceptable results, this type of pretreatment and the structural condition increase capital and operating costs and reduce reliability and repeatability.

The object of the invention is to provide an apparatus for decomposing materilas, which is adjustable to different materials to be processed so that any substances, irrespective of composition or physical form, once introduced into the apparatus will not leave until all environmental requirements for effluence have been satisfied, once a set of reaction and boundary conditions have been established within the apparatus.

The invention is provided by an apparatus for rendering environmental waste benign, comprising a melt pot lined with high temperature refractory for receiving waste in solid and liquefied form, liquefying and holding it in a liquefied state in a molten pool; a dome disposed above said pool; said dome and melt pot cooperating to form an enclosure; a waste inlet nozzle having an air lock waste feed cooperatively associated therewith and disposed to feed waste into a top portion of the dome; a liquid outlet port in fluid communication with said pool for removing liquefied material from said pool; means for solidifying said removed liquefied material; a gas outlet nozzle in fluid communication with said enclosure; a plurality of electrodes extending into the pool for heating said pool and maintaining said waste in a liquefied state; means for producing radiant energy in said dome which produces a temperature therein in the range of 1635° C; means for controlling the amount of gases removed from said enclosure; and means for controlling the flow of liquefied material from said pool in such a manner that the resident time of said liquefied material and said gases are separately controlled so that the effluent gases and effluent solidified liquid material are benign with respect to the environment, characterized in that the dome has an open and adjacent the top of the pool, said dome being affixed to a structaral steel frame, which is supported an jackscrews allowing the distance between the dome and the pool to be varied.

In general, an apparatus for rendering environmental waste benign, comprises a melt pot lined with high temperature refractory for receiving the waste irrespective of its composition in solid and liquefied form, liquefying and holding it in a liquefied state in a pool, a plurality of electrodes extending into the pool for passing current through the pool to maintain the pool in a liquefied state and add heat thereto. The system also comprises a dome disposed above the pool and having on open end adjacent the pool; a plurality of high temperature radiant heaters add energy so that the dome area reaches a temperature generally in the range of 1635° C and higher. A waste inlet nozzle having an air lock waste feed cooperatively associated therewith is disposed to feed waste into the top of the dome and a gas nozzle in fluid communication with the dome is provided for removing gases from the enclosure. There are controls that control the amount of gas removed from the enclosure and liquid discharge ports are disposed in fluid communication with the pool for removing liquid from the pool and means for controlling the flow of liquefied material from the pool and means for solidifying the liquefied material, whereby the resident time of the liquefied material and the gases in the system can be separately controlled so that the effluent gases and solidified material are environmentally benign.

The invention will become more apparent by reading the following detailed description shown by way of example in the accompanying drawings, in which:

Figure 1 is a schematic drawing of a waste destroyer and encapsulator system made in accordance with this invention;

Figure 2 is a sectional view of the high temperature waste destroyer and encapsulator; and

Figure 3 is a sectional view taken on line III-III of Fig. 2.

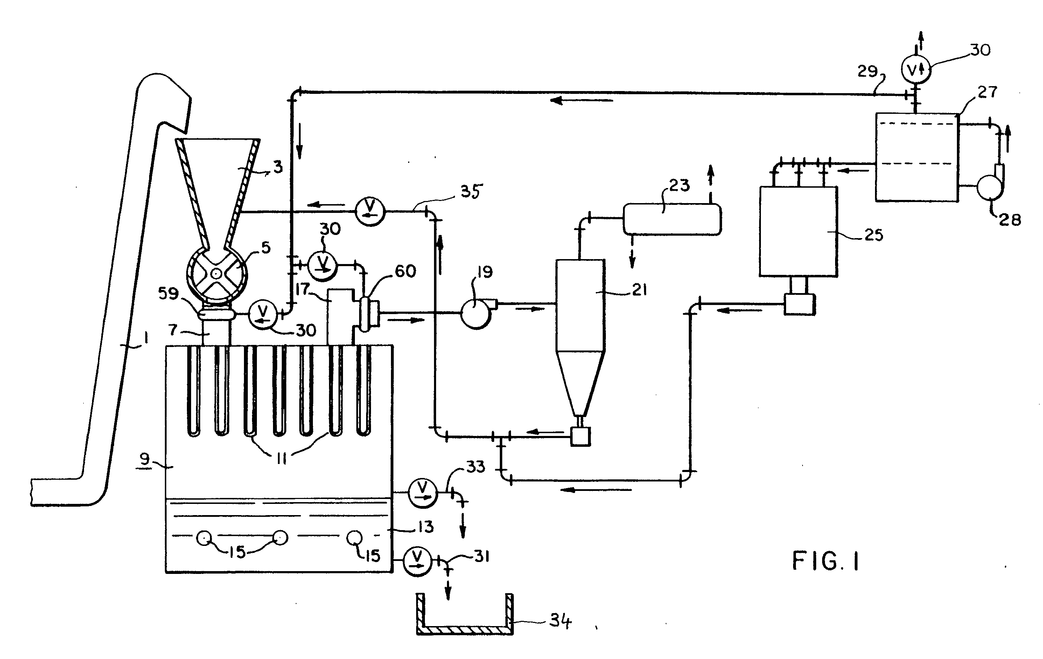

Referring now to the drawings in detail and in particular to Fig. 1, there is shown a system for rendering environmental waste benign. The environmental waste includes uncharacterized mixtures of toxic, organic, and inorganic chemicals in solid, liquid and/or gaseous form, biological materials, metals, water, and fillers such as sand or soil. The waste material is broken down to sizes generally (4 inches) 10 centimeters in diameter or preferably less. The waste material is fed via a belt conveyor 1 or other conveying means to a hopper 3 and rotary air lock valve 5, which drops discrete amounts of the waste material into a waste feed inlet nozzle 7 and into an electrically heated pyrolyzer 9, which is a non-specific reducing, slagging gasifier operating at a temperature generally in excess of (3000°F) 1635°C so that generally all organic materials are converted to carbon monoxide and hydrogen; generally all inorganic oxides, sulfides, and halides are fixed as inorganic complexes and all transient metals are reduced to their elemental state.

The heat is supplied by electricity which operates electrical heating elements 11 or other electric high temperature heating means capable of adding radiant energy which results in temperatures in excess of (3000°F) 1635°C. Electricity is also passed through a molten pool 13 via a plurality of electrodes 15 disposed in the molten pool to maintain and raise the temperature generally to about (2800°F) 1525°C. Gases are drawn off through a gas outlet nozzle 17 passed through a blower 19, cyclone separator 21, or other separating means to remove large particulate matter, a heat exchanger 23 to reduce the temperature thereof, a bag or other type of filter 25 for removing fine particulate material, and then to a scrubber 27. When the waste contains PCBs (polychlorinated biphenyls), hydrochloric acid (HCl) is produced which is removed in the scrubber 27 utilizing a solution of sodium hydroxide (NaOH) or sodium bicarbonate (NaHCO$_3$) which is circulated therethrough by a circulating pump 28. If other gases are produced, various scrubbers may be utilized.

The resident time for the off-gas is set by recirculating some of the gas back to the feed inlet nozzle 7 or to the gas outlet nozzle 17. The recirculated gas not only sets the residence time that the gas remains at high temperature, but it also assists in maintaining a reducing atmosphere in the pyrolyzer 9. The quantity of gas recirculated to each nozzle 7 and 17 and discharged to the atmosphere through a discharge line 29 is controlled by control valves 30, which are separately operated from closed to fully opened to provide a wide range of operation and control necessary to handle the uncharacterized waste material. The principal mode of heat transfer in the pyrolyzer 9 is by radiation which results in very rapid heating of the surfaces of all solids and liquids. Small solids and particulate are heated to reaction temperature in milliseconds.

Inorganic solids settle to the bottom of the reactor chamber and form a molten pool in which additional reaction takes place. Aluminates, silicates, and other silica compounds form a vitreous melt which floats on top of molten metal. Depending on the chemical environment, organics are generally converted to carbon monoxide, hydrogen, and carbon, and transitional metal oxides are reduced to free metal. Sulfur and halogens in the original feed will be released into a gas phase or a corresponding hydrogen compound, unless provisions are made in the feed material to tie them up as calcium salts, which are soluble in the vitreous pool.

The residence time in the pool is determined by the rate of feed. Thus, the system provides the operator with complete control over the residence time of both the gaseous and liquefied solid effluents allowing assured destruction of any particular or group of hazardous materials. Heavy metals, if not removed in the free state via the drain port 31, are encapsulated in the vitreous material drained via the drain port 33 at the top of the molten pool. The vitreous material is dropped into a liquid trough 34, or sprayed with coolant to cause it to solidify, encapsulating all materials therein, thus satisfying all environmental requirements for the effluents.

Particulate material removed by the cyclone separator 21 and the bag filter 25 are collected and returned to the pyrolyzer 9 through pneumatic conduits 35 or other means, via the hopper 3 or other means.

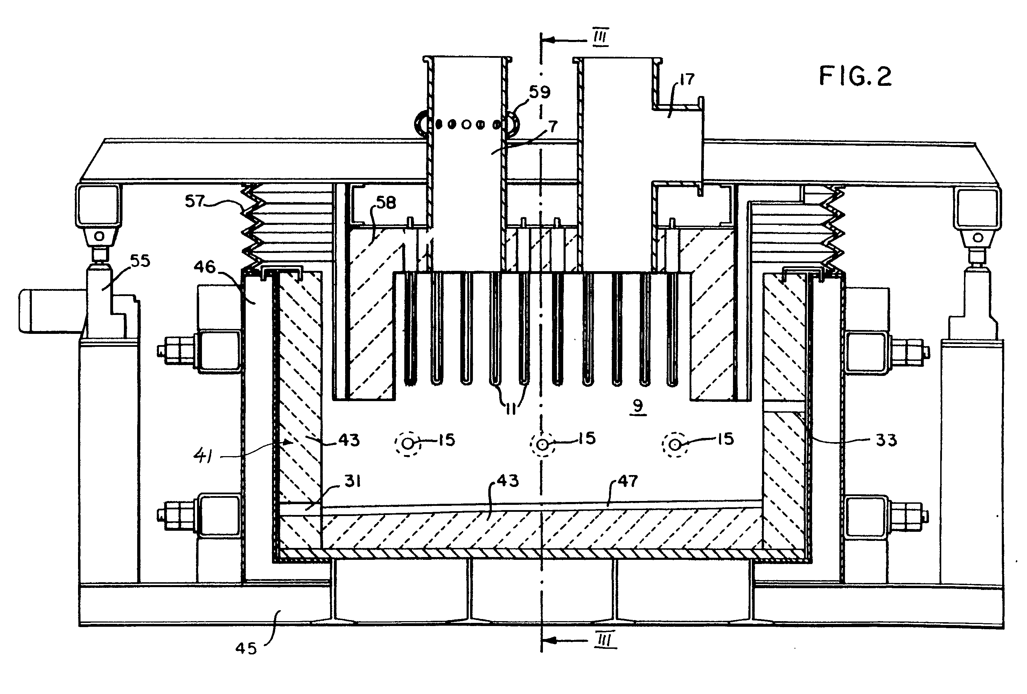

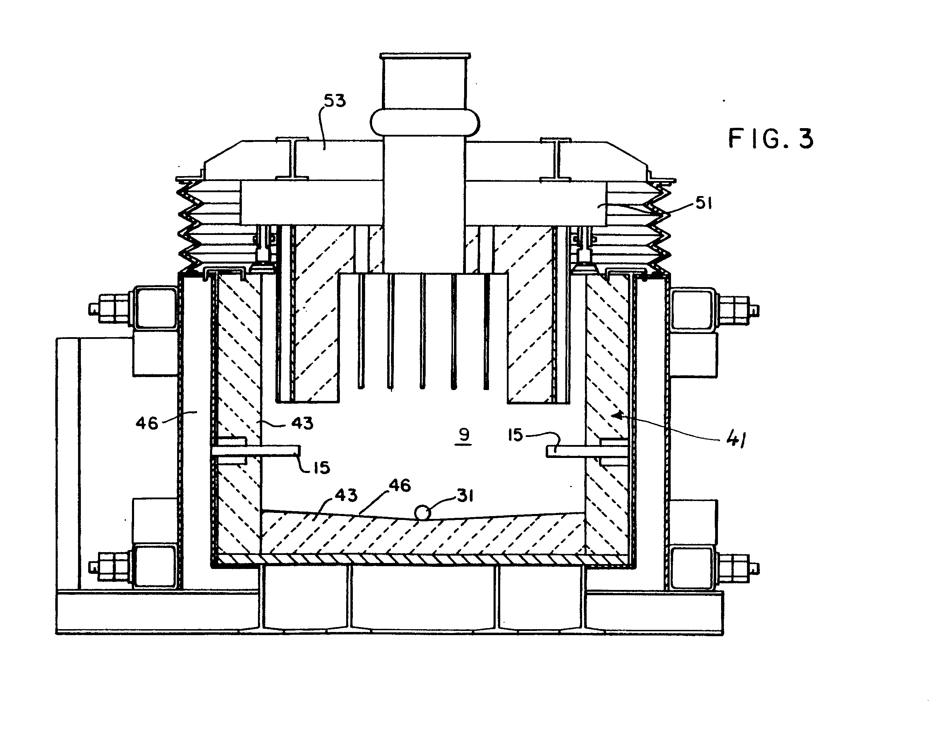

As shown in Figs. 2 and 3, the pyrolyzer 9 or reactor chamber comprises a pot 41 lined with high temperature refractory 43 and placed in a structural steel support 45. The pot 41 may have a cooling jacket 46 through which a cooling fluid flows. The pot 41 also has a sloping floor 47, which slopes toward the metal outlet or drain port 31. A vitreous material outlet port is disposed above the floor 47 at the elevation of a predetermined pool level.

Electrodes 15 or other heating means are disposed to extend through the pot 41 and into the pool 13, and in the embodiment shown pass an electric current through the molten pool 13 to raise and/or maintain a high temperature in the neighborhood of (2800° F) 1525° C in the molten pool 13.

A dome or hood portion 51 is disposed above the pool 13 and has an open end adjacent the top of the pool 13. The dome 51 is affixed to a structural steel frame 53, which is supported on jackscrews 55, allowing the distance between the dome 51 and pool 13 to be varied. While this provides flexibility and may be important where different materials are processed, the dome 51 could extend right from the pot 41 reducing the cost of the pyrolyzer 9. To provide for the relative motion between the dome 51 and the pot 41, a bellows 57 is provided to form an enclosure in which the reactions take place.

The dome 51 is lined with high temperature refractory 58 and has the waste material inlet nozzle 7 disposed in the top portion thereof adjacent one side. Waste material is loaded onto the belt conveyor 1 or other lifting means, dumped into the hopper 3, and fed through the air lock valve 5 and then through the inlet nozzle 7. A toroidal recirculating gas header 59 is in fluid communication with the inlet nozzle 7 to recycle gases to the reaction area. The gas outlet nozzle 17 is disposed in the dome 51 adjacent the side opposite the inlet feed nozzle 7. A recirculation header 60 is also disposed in fluid communication with the gas outlet nozzle 17.

A plurality of high temperature heating elements 11 or other heating means capable of attaining temperatures in excess of (3000° F) 1635° C in the dome 51 depend from the dome and in the embodiment shown are disposed around the waste feed inlet nozzle 7 and gas outlet nozzle 17. A plurality of the high temperature heating elements 11 are also disposed between the nozzles 7 and 17.

The apparatus and system hereinbefore described advantageously can be utilized to render unspecified waste environmentally benign by controlling the residence time of the off-gases and liquefied solid effluents completely separate.

## Claims

1. An apparatus for rendering environmental waste benign, comprising a melt pot (41) lined with high temperature refractory (43) for receiving waste in solid and liquefied form, liquefying and holding it in a liquefied state in a molten pool (13); a dome (51) disposed above said pool (13); said dome (51) and melt pot (41) cooperating to form an enclosure; a waste inlet nozzle (7) having an air lock waste feed (5) cooperatively associated therewith and disposed to feed waste into a top portion of the dome; a liquid outlet port (31) in fluid communication with said pool (13) for removing liquefied material from said pool (13); means (34) for solidifying said removed liquefied material; a gas outlet nozzle (17) in fluid communication with said enclosure; a plurality of electrodes (15) extending into the pool (13) for heating said pool (13) and maintaining said waste in a liquefied state; means (11) for producing radiant energy in said dome (51) which produces a temperature therein in the range of 1635° C; means (30) for controlling the amount of gases removed from said enclosure; and means (31,33) for controlling the flow of liquefied material from said pool in such a manner that the resident time of said liquefied material and said gases are separately controlled so that the effluent gases and effluent solidified liquid materials are benign with respect to the environment, characterized in that the dome (51) has an open end adjacent the top of the pool (13), said dome (51) being affixed to a structural steel frame (53) which is supported on jackscrews (55) allowing the distance between the dome (51) and the pool (13) to be varied.

2. An apparatus according to claim 1, characterized in that

a bellows (57) is provided between said dome (51) and said pool (41) to form an enclosure in which the reactions take place.

3. An apparatus according to claims 1 and 2, characterized in that

said waste material inlet nozzle (7) is disposed in the top portion of said movable dome (51).

4. An apparatus according to claims 1 and 2, characterized in that

said gas outlet nozzle (17) is disposed in the top portion of said movable dome (51).

## Revendications

1. Appareil pour neutraliser les déchets de l'environnement, comprenant un creuset (41) pourvu d'un garnissage réfractaire (43) pour hautes températures, destiné à recevoir des déchets sous forme solide et sous forme liquéfiée, à les liquéfier et à les maintenir à l'état liquéfié dans un bain (13) en fusion; un dôme (51) disposé au-dessus dudit bain (13); ledit dôme (51) et ledit creuset (41) coopérant afin de former une enceinte; une buse (7) d'admission de déchets comportant un moyen (5) d'alimentation en déchets du type à sas, associé de façon coopérante avec cette dernière et disposé de façon à acheminer les déchets à l'intérieur d'une partie supérieure du dôme; un orifice (31) de sortie de fluide en communication de flux avec ledit bain (13) afin d'extraire dudit bain (13) de la matière liquéfiée; un moyen (34) servant à solidifier ladite matière liquéfiée extraite; une buse (17) de sortie de gaz en communication de flux avec ladite enceinte; une multiplicité d'électrodes (15) s'étendant à l'intérieur du bain (13) afin de chauffer ledit bain (13) et de maintenir lesdits déchets à l'état liquéfié; un moyen (11) servant à produire de l'énergie radiante dans ledit dôme (51), ce qui engendre à l'intérieur de celui-ci une température de l'ordre de 1635°C; un moyen (30) servant à contrôler la quantité de gaz extraits de ladite enceinte; et des moyens (31, 33) servant à contrôler le flux de matière liquéfiée en provenance dudit bain de telle manière que le temps de séjour de ladite matière liquéfiée et desdits gaz soit contrôlé séparément de sorte que les effluents de gaz et de matières liquides solidifiées soient neutralisés vis-à-vis de l'environnement, caractérisé en ce que ledit dôme (51) comporte une extrémité ouverte au voisinage de la surface supérieure dudit bain (13), ledit dôme (51) étant fixé à un bâti (53) en acier profilé, qui est supporté sur des crics à vis (55) permettant de faire varier la distance entre le dôme (51) et le bain (13).

2. Appareil selon la revendication 1, caractérisé en ce qu'un soufflet (57) est prévu entre ledit dôme (51) et ledit bain (41) afin de constituer une enceinte dans laquelle ont lieu les réactions.

3. Appareil selon les revendications 1 et 2, caractérisé en ce que ladite buse (7) d'admission de déchets est disposée dans la partie supérieure dudit dôme (51) mobile.

4. Appareil selon les revendications 1 et 2, caractérisé en ce que ladite buse (17) de sortie de gaz est disposée dans la partie supérieure dudit dôme (51) mobile.

**Patentansprüche**

1. Einrichtung, um Abfälle unschädlich zu machen, bestehend aus einem Schmelztiegel (41), der mit einem hochtemperaturfesten, hitzebeständigen Futter (43) versehen ist, um Abfall in fester und verflüssigter Form aufzunehmen, ihn zu verflüssigen und im flüssigen Zustand in einem Schmelzbad (13) zu halten; einem über diesem Schmelzbad (13) angeordneten Dom (51), wobei dieser Dom (51) und dieser Schmelztiegel (41) zusammenwirken, um eine Einschließung zu bilden; einem Abfalleinlaßstutzen (7) mit einer damit in Wirkverbindung angeordneten Luftschleuse (5) zur Zufuhr des Abfalls, der so eingerich tet ist, daß der Abfall von oben in den Dom eingeführt wird; einer Flüssigkeitsauslaßöffnung (31) in Strömungsverbindung mit diesem Schmelzbad (13), um verflüssigtes Material aus diesem Schmelzbad abzuziehen; Mitteln (34) zum Verfestigen dieses abgezogenen flüssigen Materials; einer Gasauslaßdüse (17) in Strömungsverbindung mit dieser Hülle; einer Mehrzahl von Elektroden (15), die sich in dieses Schmelzbad (13) erstrecken, um dieses Schmelzbad (13) aufzuheizen und diesen Abfall im flüssigen Zustand zu halten; Mitteln (11) zur Erzeugung von Strahlungsenergie in diesem Dom (51), die in diesem eine Temperatur im Bereich von 1635°C erzeugt; Mitteln (30) zur Steuerung der aus dieser Einschließung abgezogenen Gasmenge; und aus Mittel (31, 33) zur Steuerung des flüssigen Materialstroms aus dem Schmelzbad, um die Verweilzeit dieses flüssigen Materials und der Gase unabhängig voneinander steuern zu können, so daß die abströmenden Gase und das abgezogene verfestigte, flüssige Material umweltfreundlich sind, dadurch gekennzeichnet, daß der Dom (51) oben auf dem Schmelzbad (13) ein offenes Ende hat, wobei der Dom (51) ist an einem Rahmen aus Profilstahl (53) befestigt, der auf Hebeschrauben (55) ruht, so daß der Abstand zwischen dem Dom (51) und dem Schmelzbad (13) variierbar ist.

2. Gerät gemäß Anspruch 1, dadurch gekennzeichnet, daß ein Faltenbalg (57) zwischen dem Dom (51) und dem Schmelzbad (41) angeordnet ist, um eine Einschließung zu bilden, in der die Reaktionen ablaufen.

3. Gerät gemäß Anspruch 1 und 2, dadurch gekennzeichnet, daß der Abfallmaterial-Einlaßstutzen (7) im oberen Teil des beweglichen Doms (51) angeordnet ist.

4. Gerät gemäß Anspruch 1 und 2, dadurch gekennzeichnet, daß die Gasauslaßdüse (17) im oberen Teil des beweglichen Doms (51) angeordnet ist.

FIG.1

EP 0 282 768 B1

FIG. 2

EP 0 282 768 B1

FIG. 3